# EUROPÄISCHE PATENTSCHRIFT

(11) **EP 3 098 036 B1**
(45) Veröffentlichungstag und Bekanntmachung des Hinweises auf die Patenterteilung: **02.10.2019**
(21) Anmeldenummer: 16154773.2
(22) Anmeldetag: 09.02.2016
(51) Int. Cl.: B26D 3/00, B29D 30/46, B26D 1/08, B26D 5/02

(54) **VORRICHTUNG ZUM ABLÄNGEN EINER MATERIALBAHN**
DEVICE FOR CUTTING A SHEET OF MATERIAL
DISPOSITIF DESTINE AU SECTIONNEMENT D'UNE BANDE DE MATERIAU

(30) Priorität: 29.05.2015 DE 102015209873
(43) Veröffentlichungstag der Anmeldung: 30.11.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE); Vlcek, Pavel, 76001 Zlin (CZ); Wegner, Denis, 30419 Hannover (DE)
(74) Vertreter: Widjaja, Wira

(56) Entgegenhaltungen:
- EP-A1- 1 674 252
- EP-A1- 1 902 819
- EP-A2- 1 262 288
- GB-A- 995 132
- JP-A- 2004 202 960
- US-A1- 2010 095 819

## Beschreibung

Die Erfindung betrifft Vorrichtung zum Ablängen einer Materialbahn aus einer Kautschukmischung mit einem Zubringer zum Transport der Materialbahn zu einer Schneideinrichtung mit einem Messer, dessen Schneide eine Breite aufweist, welche zumindest der Breite der Materialbahn entspricht, wobei die Materialbahn mittels des Messers über ihre gesamte Breite vorzugsweise simultan durchschneidbar ist.

*Eine derartige Vorrichtung ist beispielsweise aus der* EP 1 902 819 A1 *bekannt. Das Messer der Schneideinrichtung ist relativ zur Materialbahnebene unter einem Winkel α < 45° geneigt, wobei das Messer ferner unter einem zweiten Schnittwinkel, einem Schrägwinkel, orientiert sein kann. Die beiden Schnittwinkel sind dabei fix eingestellt.*

*Aus der* US 2010/0095819 A1 *ist eine weitere Vorrichtung zum Ablängen einer Materialbahn bekannt. Die Vorrichtung weist einen Zubringer und eine oberhalb des Zubringers angeordnete Schneideinrichtung auf, welche an ihrer Unterseite ein rotierbares Messer trägt. Die Schneideinrichtung ist innerhalb einer rechteckigen Schienenanordnung parallel zur Materialbahnebene bewegbar, wobei die Schienenanordnung von einem beidseitig des Zubringers befindlichem Gestell getragen wird. Das Messer ist unter einem spitzen Winkel relativ zur Materialbahnebene orientierbar, wobei zur Änderung des Winkels zwei seitlich angeordnete Aktuatoren betätigt werden. Die Aktuatoren sind an dem einen Ende der Schienenanordnung über Drehverbindungen mit dieser verbunden, sodass durch Betätigen der Aktuatoren die Schienenanordnung angehoben oder abgesenkt wird.*

Es ist bekannt und üblich, im Zuge der Reifenfertigung Kernpakete (Fertigkerne) bestehend aus Wulstkern und Apex (Kernprofil) bereitzustellen. Hierzu wird eine aus einer Kautschukmischung hergestellte Materialbahn mittels einer Schneideinrichtung abgelängt, die Materialbahnstücke jeweils zu einem Ring geformt und ihre Endabschnitte überlappend gespleißt. Der derart erstellte ringförmige Apex wird auf einen ringförmigen Wulstkern appliziert. Um ein Lösen des Spleißbereiches nach erfolgter Applikation des Apexes auf dem Wulstkern zu vermeiden, ist es von Vorteil, die Spleißfläche größtmöglich auszuführen.

Es ist ferner üblich, die Materialbahn unter einem Schnittwinkel von bis zu 45° relativ zur Materialbahnebene zu schneiden, wobei eine im Wesentlichen rechteckige Spleißfläche gebildet wird. Der Schnittwinkel ist bei den aktuell bekannten Anlagen durch die Anordnung der Schneideinrichtung fest vorgegeben. Um die Schnittfläche weiter zu vergrößern, kann die Materialbahn über ihrer Breite unter einem von 90° abweichenden Schnittwinkel geschnitten werden, sodass eine im Wesentlichen parallelogrammförmige Schnittfläche gebildet wird. Dieser Schnittwinkel wird üblicherweise mit zumindest 45° festgelegt. Derzeit sind keine Anlagen bekannt, bei welchen diese Schnittwinkel und beliebig und variabel gewählt werden können. In Abhängigkeit des zu fertigenden Schnittwinkel wie gewünscht variieren zu können, ist es erforderlich, Schneideinrichtungen mit Wechselteilen zu verwenden.

Der Erfindung liegt daher die Aufgabe zugrunde, eine Vorrichtung bereitzustellen, welche auf komfortable Weise das Ablängen einer Materialbahn unter variablen Schnittwinkeln gestattet.

Die gestellte Aufgabe wird erfindungsgemäß dadurch gelöst, dass neben dem Zubringer eine Führungseinrichtung angeordnet ist, welche eine konkav gekrümmte Führungsfläche aufweist und entlang welcher eine das Messer tragende Stelleinheit verstell- und fixierbar ist, sodass ein erster spitzer Schnittwinkel relativ zur Materialbahnebene stufenlos einstellbar ist, wobei das Messer mittels der Stelleinheit unter Beibehalten des eingestellten ersten Schnittwinkels kippbar ist, sodass die Materialbahn gleichzeitig unter einem zweiten Schnittwinkel zur Bildung einer parallelogrammförmigen von 90° abweichende Winkel aufweisende Schnittfläche durchschneidbar ist.

Durch das Vorsehen einer das Messer tragenden Stelleinheit mit einer konkav gekrümmten Führungsfläche ist es auf besonders rationelle Weise möglich, den ersten spitzen Schnittwinkel zu variieren und seine Größe einzustellen. Mittels der Stelleinheit ist es ferner möglich, das Messer derart zu kippen, dass der Schneidvorgang gleichzeitig unter einem zweiten einstellbaren Schnittwinkel durchführbar ist, sodass eine parallelogrammförmige Schnittfläche erstellt wird und dementsprechend eine größere Spleißfläche erzielt wird. Mit der erfindungsgemäßen Vorrichtung ist es daher auf besonders komfortable Weise möglich, Materialbahnstücke mit relativ großen Schnittflächen zu erstellen. Da in Abhängigkeit der Materialeigenschaften der zu spleißenden Materialbahnstücke unterschiedliche Schnittwinkel und unterschiedliche Schnittflächen für den nachfolgenden Spleißvorgang vorteilhaft sind, lässt sich mit der erfindungsgemäßen Vorrichtung die Qualität des Spleißes deutlich verbessern.

Bei einer bevorzugten erfindungsgemäßen Ausführungsform der Erfindung ist die Führungsfläche in Form eines Zylindermantelstückes ausgeführt, dessen Zylinderachse in der Materialbahnebene liegt und senkrecht zur Transportrichtung der Materialbahn ausgerichtet ist. Da sich bei dieser Ausführungsform die Schnittlinie des Messers an der Materialbahn unabhängig vom ersten Schnittwinkel immer an derselben Position befindet, ist es nicht erforderlich, weitere dem Apexzubringer und der Schneideinrichtung nachgelagerte Vorrichtungen, Komponenten, Bauteile und dergleichen zur Weiterverarbeitung bzw. zum Weitertransport der zugeschnittenen Materialbahnstücke an unterschiedliche erste Schnittwinkel anzupassen.

Für eine besonders schnelle und einfache Vorförderung der Materialbahn im gewünschten Ausmaß ist es von Vorteil, wenn die Führungseinrichtung gemeinsam mit der Stelleinheit und dem Messer aus dem Schneidbereich wegbewegbar ist. Ist die gewünschte Länge an Materialbahn vorgefördert, wird die Führungseinrichtung zur Durchführung der Schneidvorgänge wieder zurückbewegt.

Zur Erstellung besonders exakter, qualitativ einwandfreier Schnittflächen ist vorzugsweise ein die Materialbahn vor dem Schneidbereich fixierender Niederhalter mit einem elastisch biegbaren Andrückelement angeordnet.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine schematische Ansicht einer Vorrichtung zum Ablängen einer Materialbahn in Draufsicht gemäß einer Ausführungsform der Erfindung,
Fig. 2a und Fig. 2b je eine mittels der Vorrichtung aus Fig. 1 geschnittene Materialbahn und
Fig. 3a und Fig. 3b unterschiedliche Ausführungsformen eines Messers.

In der nachfolgenden Beschreibung beziehen sich Begriffe wie vertikal, horizontal und dergleichen auf die in den Figuren gezeigte Anordnung der betreffenden Bauteile der Vorrichtung. Unter dem Begriff Materialbahnebene wird im Nachfolgenden jene Ebene verstanden, entlang welcher die Materialbahn einer Schneideinrichtung zugeführt wird.

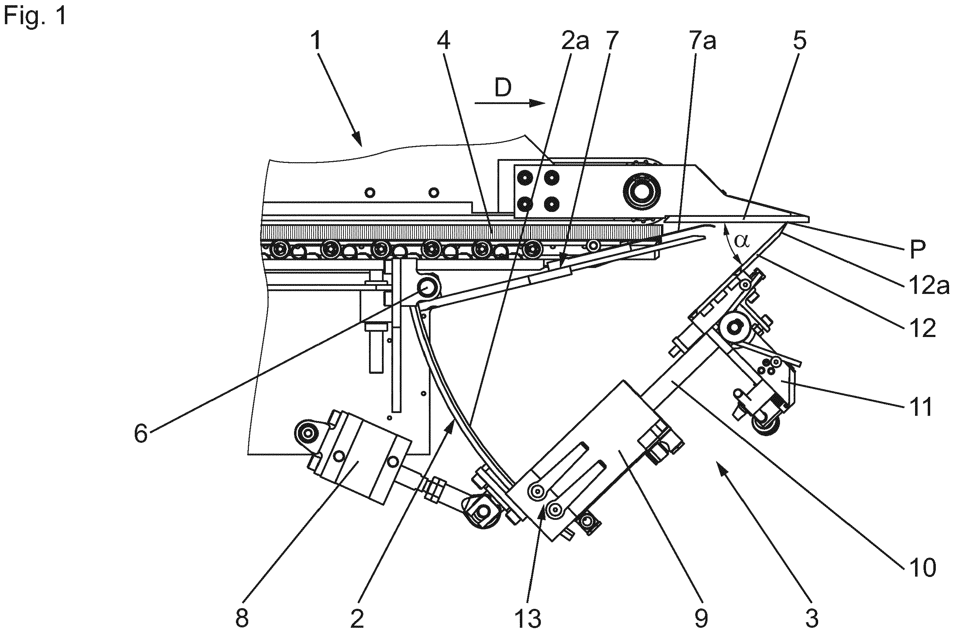

In Fig. 1 sind ein Teilbereich eines Apexzubringers 1, eine neben dem Apexzubringer 1 angeordnete Führungseinrichtung 2, eine Schneideinrichtung 3 sowie eine Materialbahn 4 dargestellt.

Die Materialbahn 4 wird insbesondere durch Extrusion aus einer Kautschukmischung hergestellt und weist einen für einen Apex (Kernprofil) üblichen Querschnitt auf. Bei der in Fig. 1 gezeigten Ausführungsform der Erfindung wird die Materialbahn 4 mittels des Apexzubringers 1 entsprechend der durch den Pfeil D gekennzeichneten Transportrichtung aufrecht stehend, beispielsweise auf einer Leiste oder dergleichen, zu einer an den Apexzubringer 1 unmittelbar anschließenden Schneidplatte 5 transportiert. Auf der Schneidplatte 5 wird die Materialbahn 4 mittels der Schneideinrichtung 3 durchgeschnitten. Die dabei gebildeten, abgelängten Materialbahnstücke werden nachfolgend jeweils zu einem ringförmigen Apex geformt, dessen Endabschnitte überlappend gespleißt werden. Anschließend wird der ringförmige Apex gemeinsam mit einem Wulstkern zu einem Kernpaket zusammengefügt. Abweichend von der in Fig. 1 gezeigten Ausführungsform kann der Apexzubringer 1 auch derart angeordnet sein, dass die Materialbahn 4 in liegender Ausrichtung zur Schneideinrichtung 3 transportiert wird. Die Orientierung der Schneideinrichtung 3 gegenüber dem Apexzubringer 1 ist dabei entsprechend anzupassen.

Die Führungseinrichtung 2 weist eine konkav gekrümmte, insbesondere kreisbogenförmig gekrümmte, Führungsfläche 2a auf und ist an einem nicht bezeichneten Gestell oder dergleichen über ein Gelenk 6 schwenkbar angeordnet. An der Führungseinrichtung 2 ist ein zur Schneidplatte 5 gerichteter Niederhalter 7 angeordnet, welcher ein elastisch biegbares Andrückelement 7a aufweist, mittels welchem die abzulängende Materialbahn 4 gegen die Schneidplatte 5 gedrückt wird. Diese Maßnahme unterstützt das Erstellen von besonders exakten, qualitativ einwandfreien Schnittflächen.

Die Führungseinrichtung 2 ist mittels eines insbesondere pneumatisch betriebenen Antriebes 8 gemeinsam mit der Schneideinrichtung 3 und dem Niederhalter 7 um das Gelenk 6 derart schwenkbar, dass der Abstand der Schneideinrichtung 3 und des Andrückelementes 7a von der Schneidplatte 5 geändert und eingestellt werden kann. Bei von der Schneidplatte 5 weggeschwenkter Schneideinrichtung 3 kann die abzulängende Materialbahn 4 zur Schneidplatte 5 gefördert werden. Ist die gewünschte Länge an Materialbahn 4 vorgefördert, werden der Niederhalter 7 und die Schneideinrichtung 3 wieder zurückgeschwenkt, sodass der Niederhalter 7 die Materialbahn 4 gegen die Schneidplatte 5 drückt.

Die Schneideinrichtung 3 weist eine Halterung 9 mit einem Messerantrieb 10 sowie eine am Messerantrieb 10 angeordnete Stelleinheit 11 mit einem zur Schneidplatte 5 gerichteten Messer 12 auf. Die Halterung 9 ist auf nicht gezeigte Weise entlang der Führungsfläche 2a verstellbar und gegenüber dieser mittels einer Klemmeinrichtung 13 fixierbar, sodass der zwischen der Materialbahnebene und dem Messer 12 gebildete erste Schnittwinkel α einstellbar ist. Die Führungsfläche 2a ist vorzugsweise derart ausgeführt, dass der erste Schnittwinkel α zwischen 10° und 45° betragen kann.

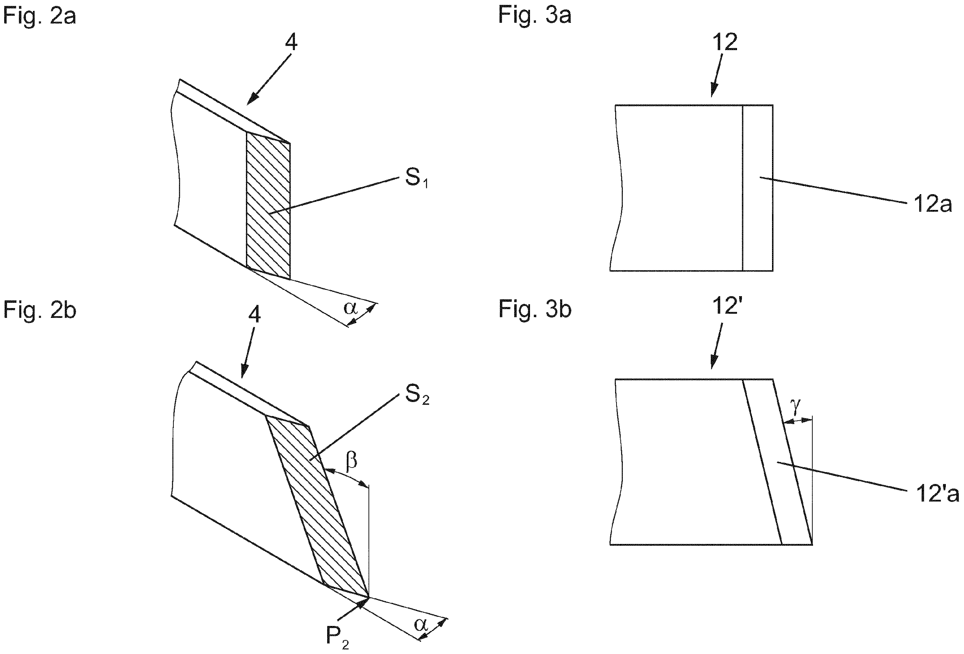

Das Messer 12 weist eine Schneide 12a auf, welche bei der in Fig. 1 gezeigten Ausführungsform vertikal orientiert ist (Fig. 3a). Die Breite des Messers 12 bzw. die dadurch gegebene Länge der Schneide 12a entspricht zumindest der Breite der Materialbahn 4. Durch Betätigen des Messerantriebes 10 ist das Messer 12 unter Beibehalten des Schnittwinkels α linear zur Schneidplatte 5 hin- und von dieser wegbewegbar. Zum Ablängen der Materialbahn 4 wird das Messer 12 zur Schneidplatte 5 hinbewegt, wobei die Schneide 12a über ihre gesamte Erstreckung im Wesentlichen gleichzeitig auf der Materialbahn 4 auftrifft, sodass diese über ihre gesamte Breite in Einem durchgeschnitten wird. Die Materialbahn 4 wird daher entlang einer im Wesentlichen vertikal verlaufenden Schnittlinie, welche in Fig. 1 als Punkt P auftritt, durchgeschnitten. Fig. 2a zeigt einen Abschnitt der Materialbahn 4 mit einer gemäß diesem Schneidvorgang erstellten Schnittfläche S₁, deren Größe (Flächeninhalt) vom eingestellten ersten Schnittwinkel α abhängt. Je kleiner der erste Schnittwinkel α gewählt wurde, desto größer ist die Schnittfläche S₁.

Bei einer bevorzugten Ausführungsform der Erfindung ist die Führungsfläche 2a in Form eines Zylindermantelstückes ausgeführt, dessen Zylinderachse in der Materialbahnebene liegt und senkrecht zur Transportrichtung D ausgerichtet ist. Da sich bei dieser Ausführungsform der Punkt P und damit auch die Schnittlinie bei sämtlichen Schnittwinkeln α immer an derselben Position befinden, ist es nicht erforderlich, weitere dem Apexzubringer 1 und der Schneideinrichtung 3 nachgelagerte Vorrichtungen, Komponenten, Bauteile und dergleichen zur Weiterverarbeitung bzw. zum Weitertransport der zugeschnittenen Materialbahnstücke an unterschiedliche Schnittwinkel α anzupassen.

Um die Schnittfläche der Materialbahn 4 gegenüber der in Fig. 2a gezeigten Schnittfläche S₁ weiter zu vergrößern, kann der Schneidvorgang derart durchgeführt werden, dass im Wesentlichen parallelogrammförmige Schnittflächen S₂ > S₁ (Fig. 2b) gebildet werden. Zur Durchführung eines solchen Schneidvorganges ist das Messer 12 mittels der Stelleinheit 11 gegenüber der vertikalen Richtung unter einem Schnittwinkel β auszurichten, wobei der Schnittwinkel α erhalten bleibt (Fig. 2b). Hierzu wird das Messer 12 mittels der Stelleinheit 11 um den gewünschten Schnittwinkel β geneigt. Anschließend wird der Schneidvorgang durchgeführt. Auch bei dieser Ausführung muss sichergestellte sein, dass die Breite des Messers 12' derart groß ist, dass unter den möglichen Schnittwinkeln β die Materialbahn 4 über ihre gesamte Breite in Einem durchgeschnitten wird.

Bei einer besonders bevorzugten Ausführungsform der Erfindung verläuft die Schneide des Messers derart schräg, dass nach Einstellung des gewünschten Schnittwinkels β und bei Durchführung eines Schneidvorganges unter diesem Schnittwinkel β die gesamte Schneide gleichzeitig auf die Schneidplatte 5 auftrifft. Fig. 3b zeigt die Ansicht eines derartigen Messers 12' mit einer Schneide 12a'. Die Schneide 12a' verläuft unter einem Winkel γ von beispielsweise 15° und liegt bei eingestelltem Schnittwinkel β in einer parallel zur Materialbahnebene verlaufenden Ebene.

Bei einer besonders bevorzugten Ausführung der Erfindung ist die durch den Punkt P₂ gekennzeichnete punktuelle Position bei sämtlichen einstellbaren Schnittwinkeln β konstant. Bei dieser erfindungsgemäßen Ausführungsform ist die Drehachse der Stelleinheit 11 die Schnittgerade der horizontal auf die Materialbahnebene stehenden und durch die Unterkante der Materialbahn 4 verlaufenden Ebene und jener Ebene, welche durch die der Materialbahn 4 zugewandten Fläche des Messers 12, 12' aufgespannt wird.

### Bezugsziffernliste

- 1: Apexzubringer
- 2: Führungseinrichtung
- 2a: Führungsfläche
- 3: Schneideinrichtung
- 4: Materialbahn
- 5: Schneidplatte
- 6: Gelenk
- 7: Niederhalter
- 7a: Andrückelement
- 8: Antrieb
- 9: Halterungselement
- 10: Messerantrieb
- 11: Stelleinheit
- 12: Messer
- 12': Messer
- 12a: Schneide
- 12a': Schneide
- 13: Klemmeinrichtung

## Patentansprüche

1. Vorrichtung zum Ablängen einer Materialbahn (4) aus einer Kautschukmischung mit einem Zubringer (1) zum Transport der Materialbahn (4) zu einer Schneideinrichtung (3) mit einem Messer (12, 12'), dessen Schneide (12a, 12a') eine Breite aufweist, welche zumindest der Breite der Materialbahn (4) entspricht, wobei die Materialbahn (4) mittels des Messers (12, 12') über ihre gesamte Breite vorzugsweise simultan durchschneidbar ist,
**dadurch gekennzeichnet,**
**dass** neben dem Zubringer (1) eine Führungseinrichtung (2) angeordnet ist, welche eine konkav gekrümmte Führungsfläche (2a) aufweist und entlang welcher eine das Messer (12, 12') tragende Stelleinheit (11) verstell- und fixierbar ist, sodass ein erster spitzer Schnittwinkel (α) relativ zur Materialbahnebene stufenlos einstellbar ist, wobei das Messer (12, 12') mittels der Stelleinheit (11) unter Beibehalten des eingestellten ersten Schnittwinkels (α) kippbar ist, sodass die Materialbahn (4) gleichzeitig unter einem zweiten Schnittwinkel (β) zur Bildung einer parallelogrammförmigen von 90° abweichende Winkel aufweisende Schnittfläche (S₂) durchschneidbar ist.

2. Vorrichtung nach Anspruch 1,
**dadurch gekennzeichnet, dass**
das Messer (12, 12') an der Stelleinheit (11) derart angeordnet ist,
wobei die "punktuelle" Position (P₂) der geschnittenen Materialbahn (4) unabhängig vom eingestellten zweiten Schnittwinkel (β) ist.

3. Vorrichtung nach Anspruch 1 oder 2, **dadurch gekennzeichnet, dass** die Führungsfläche (2a) in Form eines Zylindermantelstückes ausgeführt ist, dessen Zylinderachse in der Materialbahnebene liegt und senkrecht zur Transportrichtung (D) der Materialbahn (4) ausgerichtet ist.

4. Vorrichtung nach einem der Ansprüche 1 bis 3, **dadurch gekennzeichnet, dass** die Führungseinrichtung (2) gemeinsam mit der Stelleinheit (11) und dem Messer (12, 12') aus dem Schneidbereich wegbewegbar ist.

5. Vorrichtung nach einem der Ansprüche 1 bis 4, **dadurch gekennzeichnet, dass** an der Führungseinrichtung (2) ein die Materialbahn (4) vor dem Schneidbereich fixierender Niederhalter (7) mit einem elastisch biegbaren Andrückelement (7a) angeordnet ist.

## Claims

1. Apparatus for cutting to length a material web (4) made of a rubber compound, having a conveyor (1) for transporting the material web (4) to a cutting device (3) with a cutter (12, 12'), the blade (12a, 12a') of which has a width that corresponds at least to the width of the material web (4), wherein the material web (4) is able to be severed preferably simultaneously across its entire width by means of the cutter (12, 12'),
**characterized**
**in that**, next to the conveyor (1), a guide device (2) is arranged, which has a concavely curved guide surface (2a) and along which an adjusting unit (11) carrying the cutter (12, 12') is able to be adjusted and fixed, such that a first acute cutting angle (α) relative to the material web plane is continuously adjustable, wherein the cutter (12, 12') is tiltable by means of the adjusting unit (11) with the set first cutting angle (α) being maintained, such that the material web (4) is able to be severed simultaneously at a second cutting angle (β) to form a parallelogram-shaped cut surface (S₂) having angles other than 90°.

2. Apparatus according to Claim 1,
**characterized in that**
the cutter (12, 12') is arranged on the adjusting unit (11) in such a way,
wherein the "point-wise" position (P₂) of the cut material web (4) is independent of the set second cutting angle (β).

3. Apparatus according to Claim 1 or 2, **characterized in that** the guide surface (2a) is embodied in the form of a cylinder jacket section, the cylinder axis of which lies in the material web plane and is oriented perpendicularly to the transport direction (D) of the material web (4).

4. Apparatus according to one of Claims 1 to 3,
**characterized in that** the guide device (2) is movable away from the cutting region together with the adjusting unit (11) and the cutter (12, 12').

5. Apparatus according to one of Claims 1 to 4,
**characterized in that** a holding-down means (7) that fixes the material web (4) in front of the cutting region and has an elastically bendable contact-pressure element (7a) is arranged on the guide device (2).

## Revendications

1. Dispositif pour sectionner une bande de matériau (4) constituée d'un mélange de caoutchouc avec un dispositif d'amenée (1) pour le transport de la bande de matériau (4) à un dispositif de coupe (3) avec un couteau (12, 12') dont la lame de coupe (12a, 12a') présente une largeur qui correspond au moins à la largeur de la bande de matériau (4), la bande de matériau (4) pouvant être de préférence sectionnée simultanément sur toute sa largeur au moyen du couteau (12, 12'),
**caractérisé en ce**
**qu'**un dispositif de guidage (2) est disposé à côté du dispositif d'amenée (1), lequel présente une surface de guidage de courbure concave (2a) le long de laquelle peut être déplacée et fixée une unité de réglage (11) portant le couteau (12, 12'), de telle sorte qu'un premier angle de coupe aigu (α) puisse être ajusté de manière continue par rapport au plan de la bande de matériau, le couteau (12, 12') pouvant être basculé au moyen de l'unité de réglage (11) en conservant le premier angle de coupe ajusté (α) de telle sorte que la bande de matériau (4) puisse simultanément être sectionnée suivant un deuxième angle de coupe (β) pour former une surface de coupe (S₂) en forme de parallélogramme présentant un angle s'écartant de 90°.

2. Dispositif selon la revendication 1,
**caractérisé en ce que**
le couteau (12, 12') est disposé au niveau de l'unité de réglage (11) de telle sorte,
la position « ponctuelle » (P₂) de la bande de matériau coupée (4) étant indépendante du deuxième angle de coupe ajusté (β).

3. Dispositif selon la revendication 1 ou 2,
**caractérisé en ce que** la surface de guidage (2a) est réalisée sous la forme d'une pièce d'enveloppe cylindrique dont l'axe de cylindre est situé dans le plan de la bande de matériau et est orienté perpendiculairement à la direction de transport (D) de la bande de matériau (4).

4. Dispositif selon l'une quelconque des revendications 1 à 3, **caractérisé en ce que** le dispositif de guidage (2) peut être déplacé conjointement avec l'unité de réglage (11) et le couteau (12, 12') à l'écart de la région de coupe.

5. Dispositif selon l'une quelconque des revendications 1 à 4, **caractérisé en ce qu'**un élément de maintien vers le bas (7) fixant la bande de matériau (4) avant la région de coupe est disposé au niveau du dispositif de guidage (2) avec un élément de pressage (7a) pouvant fléchir élastiquement.
